# DEMANDE DE BREVET EUROPEEN

(11) **EP 1 029 726 A1**
(43) Date de publication de la demande: **23.08.2000**
(21) Numéro de dépôt: 00400378.6
(22) Date de dépôt: 10.02.2000
(51) Int. Cl.: B60J 5/04

(54) **Agencement de renfort de porte pour véhicule automobile**

(30) Priorité: 17.02.1999 FR 9901928
(71) Demandeur: Peugeot Citroen Automobiles SA, 92200 Neuilly sur Seine (FR)
(72) Inventeur: Expert, Benoît, 92350 Le Plessis Robinson (FR)
(74) Mandataire: Berger, Helmut

(57) **Abrégé**

L'invention concerne un agencement de renfort de porte pour véhicule automobile.

Cet agencement (2) est caractérisé en ce qu'il présente des aménagements (12) permettant d'y fixer un tube ou une tige de renfort.

L'invention est utilisable pour des véhicules automobiles.

## Description

L'invention concerne un agencement de renfort de porte pour véhicule automobile.

Des agencements de renfort de porte de ce type sont utilisés pour des raisons de marketing et de sécurité et sont réalisés sous forme de renforts latéraux constitués le plus souvent de tubes ou de tôles pliées.

Cependant, pour des raisons de coût, tous les véhicules ne sont pas équipés de tels renforts. En effet, certains pays n'exigent pas la présence de ces renforts et ces derniers sont alors plutôt réservés aux véhicules de haut de gamme. Par contre, d'autres pays exigent que tous les véhicules soient équipés de renforts constitués par des tubes.

Il arrive donc que, pour certains modèles prévus normalement sans renfort de porte, on soit obligé d'en installer pour les véhicules destinés à ces pays, ce qui nécessite trois pièces de plus, à savoir le tube et deux supports, ces derniers étant généralement soudés sur la doublure de porte. Le coût de cette opération est relativement important, ce qui peut être assez gênant si le nombre de véhicules vendus dans ces pays est faible.

L'invention a pour but de résoudre le problème qui vient d'être décrit.

Pour atteindre ce but, un agencement de renfort de porte selon l'invention est caractérisé en ce que ce renfort présente des aménagements permettant d'y fixer un tube ou une tige de renfort.

Ainsi l'invention permet d'équiper tous les véhicules d'un renfort de porte "léger", pourvu de moyens pour y fixer un tube si cela est nécessaire.

Selon une caractéristique de l'invention, le renfort est réalisé sous forme d'une barre disposée avantageusement sensiblement horizontalement sur la face interne de la porte, qui comporte des moyens de support du tube de renfort destiné à s'étendre parallèlement à l'axe de la barre.

Selon une autre caractéristique de l'invention, la barre est formée essentiellement par une bande d'une tôle dont les bords longitudinaux sont repliés et qui comporte des éléments en saillie depuis la partie médiane de la barre, destinés à supporter le tube de renfort.

Selon une autre caractéristique, les éléments en saillie de support du tube sont disposés aux extrémités de la barre de renfort et pourvus d'ouvertures permettant l'engagement du tube de renfort.

Selon encore une autre caractéristique de l'invention, la barre comporte à chaque extrémité une bride de fixation directe sur la doublure de porte.

Selon encore une autre caractéristique, chaque bride de fixation est obtenue par pliage de l'extrémité de la tôle formant ladite barre autour d'une ligne de pliage transversale et par repliage de la partie repliée autour d'une autre ligne transversale pour former une patte de fixation.

Selon encore une autre caractéristique de l'invention, un élément en saillie de support du tube de renfort est formé par la partie inclinée de la bride, située entre les deux lignes de pliage transversales, les ouvertures de passage du tube étant pratiquées dans ces parties inclinées.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en perspective de la face interne d'une porte de véhicule automobile équipée d'un agencement de renfort de porte selon l'invention.

La figure 2 est une vue de dessus d'un agencement de renfort de porte selon l'invention, comportant un tube de renfort.

La figure 3 est une vue en coupe le long de la ligne III-III de la figure 2.

La figure 4 est une vue en coupe le long de la ligne IV-IV de la figure 3.

La figure 5 est une vue suivant la flèche V de la figure 3.

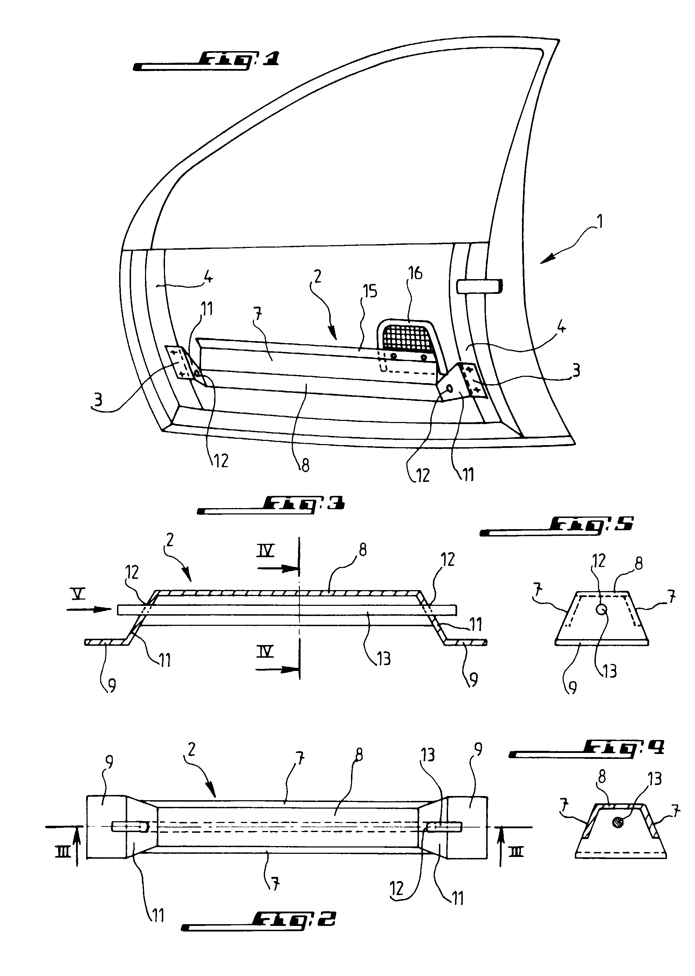

La figure 1 montre une porte de véhicule automobile 1 équipée d'un agencement de renfort de porte 2, selon l'invention, qui présente la forme générale d'une barre et est fixée par ses extrémités 3 directement sur la doublure 4 de la porte, par exemple par soudage.

La barre de l'agencement de renfort de porte 2 présente une section transversale ayant la forme d'un U dont les branches latérales 7 s'étendent à partir de la base 8 en s'écartant l'une de l'autre et a ses extrémités 3 configurées en brides de fixation. Chaque bride comporte une patte de fixation 9 qui s'étend parallèlement à la partie médiane de base plane 8 de la barre, et une partie intermédiaire inclinée 11 reliant la patte de fixation 9 à la base 8. Dans chaque partie de bride intermédiaire 11 est pratiquée une ouverture 12 de passage d'un tube de renfort 13. Conformément à la figure 3, le tube 13 peut être monté dans l'agencement de renfort 2 en étant supporté à ses deux extrémités par les parties intermédiaires 11 des brides de fixation. Le tube peut être fixé à la poutre par exemple par soudage.

La figure 1 illustre un procédé peu coûteux de réalisation de la barre de renfort par repliage des bords longitudinaux d'une bande de tôle pour former les branches latérales 7 du profilé et par double pliage des extrémités 3 de la bande autour de deux lignes de pliage transversales, la partie intermédiaire 11 étant la portion de la bande située entre ces deux lignes de pliage.

Sur la figure 1 le rebord longitudinal supérieur 7 est prolongé latéralement par une aile repliée 15 qui permet la fixation sur la poutre de renfort d'un élément tel qu'un absorbeur de choc à déformation progressive, communément appelé "padding", c'est-à-dire d'un élément rigide 16 monté sur la porte du véhicule, intégré au garnissage intérieur de la porte et destiné à venir en contact avec une partie résistante du corps, généralement le bassin, de la personne assise sur le siège adjacent, en cas de choc latéral, pour diminuer les blessures sur les parties plus fragiles, par exemple le torax.

Il ressort de la description qui vient d'être faite de l'agencement de renfort de porte selon l'invention que cet agencement, d'un surcoût faible est destiné à équiper tous les véhicules. Ainsi, pour les pays qui n'exigent pas de renfort latéral de porte, on aura quand même une protection, mais, pour les pays qui exigent la présence d'un tube de renfort, celui-ci peut être facilement installé puisqu'il suffit de souder le tube dans les ouvertures 12 prévues dans les brides de fixation.

## Revendications

1. Agencement de renfort de porte pour véhicule automobile, du type présentant des aménagements (12) permettant d'y fixer un tube ou une tige de renfort (13), caractérisé en ce qu'il est réalisé sous forme d'une barre disposée avantageusement sensiblement horizontalement sur la face interne de la porte (1), qui comporte des moyens de support (11, 12) du tube de renfort (13) destiné à s'étendre parallèlement à l'axe de la barre.

2. Agencement selon la revendication 1, caractérisé en ce que la barre est formée essentiellement par une bande de tôle dont les bords longitudinaux (7) sont repliés selon la configuration d'un U et qui comporte des éléments (11) en saillie à partir de la partie médiane (8) de la barre, qui sont destinés à supporter la tige de renfort (13).

3. Agencement selon la revendication 2, caractérisé en ce que les éléments en saillie de support (11) du tube (13) sont situés aux extrémités de la barre de renfort et pourvus chacun d'une ouverture (12) permettant l'engagement du tube (13).

4. Agencement selon l'une des revendications 1 à 3, caractérisé en ce que la barre de renfort comporte à chaque extrémité (3) une bride de fixation directe sur la doublure (4) de la porte.

5. Agencement selon la revendication 4, caractérisé en ce que chaque bride de fixation est obtenue par pliage de l'extrémité (3) de la tôle formant ladite barre autour d'une ligne de pliage transversale et par repliage de la partie repliée autour d'une autre ligne transversale pour former une patte de fixation (9).

6. Agencement selon la revendication 5, caractérisé en ce qu'un élément en saillie de support (11) du tube de renfort (13) est formé par la partie inclinée d'une bride, située entre les deux lignes de pliage transversales, les ouvertures (12) de passage du tube étant pratiquées dans ces parties (11).

7. Agencement selon l'une des revendications 1 à 6, caractérisé en ce qu'il présente des aménagements pour y fixer un élément tel qu'un absorbeur de choc à déformation progressive.
